# EUROPEAN PATENT APPLICATION

(11) **EP 1 902 935 A1**
(43) Date of publication of application: **26.03.2008**
(21) Application number: 07425576.1
(22) Date of filing: 20.09.2007
(51) Int. Cl.: B62J 17/08

(54) **Motorcycle rain cap**

(30) Priority: 21.09.2006 IT IS20060003; 21.09.2006 IT IS20060003 U
(71) Applicant: Fortini, Maria Antonia, 81014 Capriati a Volturno (IT)
(72) Inventor: Viccidne, Pino, 81014 Capriati a Volturno (IT)

(57) **Abstract**

Moving with motorbikes and scooter is not easy when it rains but they are very smooth in the city traffic and with reduced use of petrol. Having a protection these vehicles could go on roads even with bad weather. This would increase the use of the vehicles especially in the city, helping the urban traffic and cutting down consumes. The rain cap for motorbikes and scooter passengers is realized of light plastic material resistant transparent and visibility in any direction. The cap covers the upper part of the vehicle with inside the passenger. The cap is applied to the vehicle frame with an easy opening.

## Description

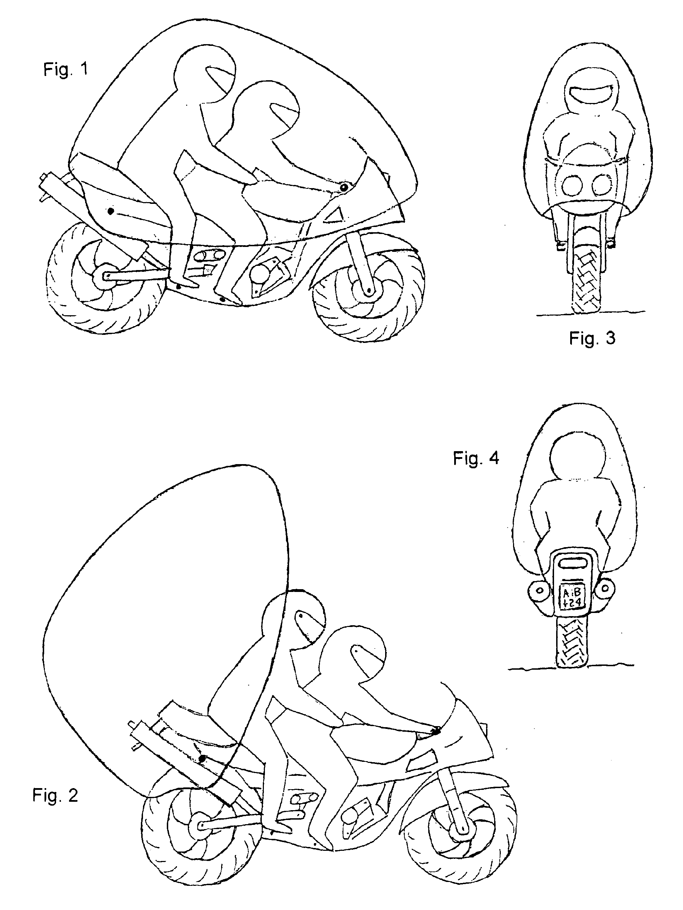

The industrial invention called "Rain cap to protect motorbike and scooter passengers" is realized of light plastic and resistant material. It has the from of a cap. Inside you have the visual in any direction. The cap is applied to the vehicle home and contains the upper part of it (how it's shown in the enclose drawing 1/1 Fig.1 - Fig.2 ).The passengers sitting in the motorbike o scooter are inside the cap with the upper of their body are protected from rain and wind. The legs (from the knee dawn) are free to move outside. To go out from the cap when the vehicles stops you raise it getting it up from the front part.

The cap is fixed to the vehicle frame in a anchoring and rotation point. Around that point the cap turns for the raising of the opening. The cap can be realized in many sizes in function of the model of scooter or motorbike on which it is applied.

## Claims

1. The Rain cap to protect motorbikes and scooter passengers from water and wind and it consents motorbikes and scooter travel without the use of protective clothing.

2. The Rain cap is **characterized by** the fact that it is attachable to any kind of motorbikes or scooter.

3. The Rain cap protects in a comfortable and simple way motorbikes and scooter passengers thus favoring more use of the two wheeled vehicle in the city limits and reducing the volume of traffic and consumption of fuel.

4. The Rain cap is **characterized** also visually by a simple and pleasant form.
